# EUROPEAN PATENT SPECIFICATION

(11) **EP 3 142 173 B1**
(45) Date of publication and mention of the grant of the patent: **02.01.2019**
(21) Application number: 15789365.2
(22) Date of filing: 16.04.2015
(51) Int. Cl.: H01M 4/13, H01M 4/36, H01M 4/58, H01M 10/0569, H01M 4/62, H01M 10/0525, H01M 10/054, H01M 4/02

(54) **POSITIVE ELECTRODE FOR NONAQUEOUS ELECTROLYTE SECONDARY BATTERIES, AND NONAQUEOUS ELECTROLYTE SECONDARY BATTERY**
POSITIVELEKTRODE FÜR EINE SEKUNDÄRBATTERIE MIT WASSERFREIEM ELEKTROLYT UND SEKUNDÄRBATTERIEN MIT WASSERFREIEM ELEKTROLYT
ÉLECTRODE POSITIVE POUR ACCUMULATEURS À ÉLECTROLYTE NON AQUEUX ET ACCUMULATEUR À ÉLECTROLYTE NON AQUEUX

(30) Priority: 07.05.2014 JP 2014096066
(43) Date of publication of application: 15.03.2017
(73) Proprietor: Eliiy Power Co., Ltd., Tokyo 141-0032 (JP)
(72) Inventor: KUZUSHIMA, Yusuke, Tokyo 141-0032 (JP); HARA, Tomitaro, Tokyo 141-0032 (JP)
(74) Representative: Zanoli, Enrico
(86) International application number: PCT/JP2015/061715
(87) International publication number: WO 2015/170561

(56) References cited:
- EP-A2- 2 006 937
- WO-A1-2006/129756
- WO-A1-2012/063369
- JP-A- H05 159 807
- JP-A- 2012 054 135
- JP-A- 2012 109 166
- JP-A- 2014 049 258
- US-A1- 2013 260 245
- US-A1- 2013 330 623

## Description

### TECHNICAL FIELD

The present invention relates to a positive electrode for a nonaqueous electrolyte secondary battery, and a nonaqueous electrolyte secondary battery.

### BACKGROUND ART

Recently, nonaqueous electrolyte secondary batteries, such as lithium ion secondary batteries, have been in practical use as compact and lightweight batteries having high capacity and capable of being charged and discharged.

These batteries serve as a power supply of an electronic device, such as a mobile communication device or a notebook-size personal computer, which is rapidly becoming more and more compact. In addition, in the midst of the growing concern about resource saving and energy saving as well as an increase in energy efficiency in the light of the international protection of the global environment which has recently been damaged, a nonaqueous electrolyte secondary battery has been studied and developed as a battery for a stationary large-capacity electricity storage system. In addition, in the automotive industry, a lithium ion secondary battery has been studied and developed as a battery for driving a motor in an electric vehicle (hereinafter referred to as "EV") or a hybrid electric vehicle (hereinafter referred to as "HEV") to ensure effective use of energy.

Generally, a lithium ion secondary battery uses, as an electrolyte solution, a flammable nonaqueous electrolyte solution prepared by dispersing a lithium salt into a nonaqueous solvent. Further, a lithium ion secondary battery may generate heat due to overcharge or short-circuiting between a positive electrode and a negative electrode. Furthermore, a positive electrode active material may release oxygen in a crystal due to overcharge or thermal decomposition. Therefore, a lithium ion secondary battery is at a risk of abnormal heat generation and ignition. To prevent an accident caused by the abnormal heat generation and ignition, a lithium ion secondary battery is provided with a safety mechanism. For example, a safety valve provided to a battery case and a separator including a shut-down mechanism have been known (for example, see Patent Documents 1 and 2).

A lithium ion secondary battery provided with a safety valve is configured such that, when the battery is in an abnormal state due to abnormal heat generation caused by overcharge or the like, the safety valve cleaves to release the increased internal pressure of the battery in order to prevent the battery from exploding.

Further, a lithium ion secondary battery provided with a separator having a shut-down mechanism is configured such that, when the battery is in an abnormal state due to heat generation caused by overcharge or the like, pores are closed (shut down) by melting the separator at a certain temperature to block a path of conductive ions in the battery, in order to prevent the further progress of a battery reaction.

In addition, it has been known that, when a nonaqueous secondary battery is charged, a resistance coating film derived from an electrolyte solution component in a positive electrode active material layer may be formed in some cases (for example, see Patent Document 3). Furthermore, a secondary battery provided with a positive electrode where the pore volume having a pore diameter not exceeding 0.1 micrometer occupies 70% or more of the total material pore volume is known in the art (see Patent Document 4), as well as lithium-transition metal based positive-electrode materials for a lithium secondary battery (see Patent Document 5).

### CITATION LIST

### PATENT DOCUMENT

Patent Document 1: Japanese Unexamined Patent Publication No. 2014-49398
Patent Document 2: Japanese Unexamined Patent Publication No. 2012-3938
Patent Document 3: Japanese Unexamined Patent Publication No. 2014-4928
Patent Document 4: JPH05159805
Patent Document 5: EP2006937

### DISCLOSURE OF THE INVENTION

### PROBLEM TO BE SOLVED BY THE INVENTION

However, in the lithium ion secondary battery provided with a safety valve, when the safety valve is opened due to abnormal heat generation, the electrolyte solution in the battery splatters around, which is likely to adversely affect surrounding devices.

In addition, in the lithium ion secondary battery provided with a separator having a shut-down mechanism, a type of a material for the separator is limited. Furthermore, if a large heat generation occurs, the function to prevent short-circuiting between the positive electrode and the negative electrode of the separator is deteriorated due to the shrinkage of the entire separator, resulting in that the battery may abnormally generate heat.

In addition, in the midst of the growing demand for safety in overcharge, the need of another safety mechanism has been increasing in addition to the safety valve and the shut-down mechanism for a separator.

In view of the above-described circumstances, the present invention has been achieved to provide a nonaqueous electrolyte secondary battery that can increase an internal resistance value of a positive electrode to suppress abnormal heat generation while in overcharge.

### MEANS FOR SOLVING THE PROBLEMS

The present invention provides a positive electrode for a nonaqueous electrolyte secondary battery provided with a porous positive electrode active material layer that contains a positive electrode active material, wherein the positive electrode active material layer is formed so that a logarithmic differential pore volume distribution curve thereof, which shows the relation between pore diameter and pore volume of pores in the positive electrode active material layer, is a single-peak type curve, the positive electrode active material has an olivine-type crystal structure, the distribution curve is obtained by measuring a pore distribution of the positive electrode active material layer using a mercury porosimeter, the distribution curve has the single peak having a full width at half maximum of from 0.001 µm to 0.05 µm inclusive, and the sum of the pore volumes of the pores within a pore diameter range corresponding to the full width at half maximum is 70% or more of the total pore volume. In addition a non aqueous electrolyte secondary battery comprising the positive electrode in combination with a non-aqueous electrolyte comprising a carbonate compound as a solvent.

### EFFECT OF THE INVENTION

According to the present invention provided with a positive electrode active material layer containing a positive electrode active material, an electrode reaction can be promoted. According to the present invention, since the positive electrode active material layer is porous, the pores in the positive electrode active material layer can be filled with a nonaqueous electrolyte solution, when the positive electrode of the present invention is incorporated into a nonaqueous electrolyte secondary battery, whereby the reaction surface of the positive electrode can be increased. Thus, charging/discharging characteristics of the nonaqueous electrolyte secondary battery can be improved.

According to the present invention, the positive electrode active material layer is formed so that the logarithmic differential pore volume distribution curve thereof, which shows the relation between pore diameter and pore volume of the pores in the positive electrode active material layer, is a single-peak type curve, the positive electrode active material has an olivine-type crystal structure, the distribution curve is obtained by measuring a pore distribution of the positive electrode active material layer using a mercury porosimeter, the distribution curve has the single peak having a full width at half maximum of from 0.001 µm to 0.05 µm inclusive, and the sum of the pore volumes of the pores within a pore diameter range corresponding to the full width at half maximum is 70% or more of the total pore volume. This configuration enables the positive electrode active material layer to have a porous structure having a high homogeneity. In addition, when the nonaqueous electrolyte secondary battery into which the positive electrode according to the present invention is incorporated is in an overcharge condition, the configuration described above can raise the internal resistance of the positive electrode to prevent a charging current from flowing between the positive electrode and a negative electrode. Thus, abnormal heat generation in an overcharge condition can be suppressed, whereby safety of the nonaqueous electrolyte secondary battery can be improved. This has been revealed by experiments conducted by the inventors of the present invention. Although the reason why a current flowing between the positive electrode and the negative electrode can be suppressed due to the rise in the internal resistance of the positive electrode in overcharge is unclear, it is considered that, when a reaction of forming a resistance coating film due to a charging current in overcharge progresses in the positive electrode active material layer having a porous structure with a high homogeneity, a reaction substance is uniformly supplied to a reaction section, and therefore, a resistance coating film is uniformly formed.

In addition, the nonaqueous electrolyte secondary battery having incorporated therein the positive electrode according to the present invention can suppress a current flowing inside the battery by raising the internal resistance of the positive electrode while in overcharge without relying on a shut-down mechanism of a separator, and thus, is able to use various kinds of separators.

### BRIEF DESCRIPTION OF THE DRAWINGS

Fig. 1 (a) is a schematic plan view of a positive electrode for a nonaqueous electrolyte secondary battery of an embodiment of the present invention, and Fig. 1 (b) is a schematic cross sectional view of the positive electrode taken along a dotted line A-A in Fig. 1 (a).
Fig. 2 is a schematic cross sectional view showing an internal structure of a positive electrode active material included in the positive electrode for a nonaqueous electrolyte secondary battery of an embodiment of the present invention.
Fig. 3 is a schematic cross sectional view of a nonaqueous electrolyte secondary battery of an embodiment of the present invention.
Fig. 4 (a) is a schematic plan view of a negative electrode included in the nonaqueous electrolyte secondary battery of an embodiment of the present invention, and Fig. 4 (b) is a schematic cross sectional view of the negative electrode taken along a dotted line B-B in Fig. 4 (a).
Fig. 5 is a schematic perspective view showing the configuration of a power generation element included in the nonaqueous electrolyte secondary battery of an embodiment of the present invention.
Fig. 6 is a graph showing a pore distribution curve measured by pore distribution measurement.
Fig. 7 is a graph showing a pore distribution curve measured by pore distribution measurement.
Fig. 8 is a graph showing a pore distribution curve measured by pore distribution measurement.
Fig. 9 is a graph showing a pore distribution curve measured by pore distribution measurement.
Fig. 10 is a graph showing a pore distribution curve measured by pore distribution measurement.
Fig. 11 is a graph showing a voltage curve measured by an overcharge test.
Fig. 12 is a graph showing a voltage curve measured by an overcharge test.
Fig. 13 is a graph showing a current curve measured by an overcharge test.
Fig. 14 is a graph showing a current curve measured by an overcharge test.
Fig. 15 is a graph showing an increase in a battery temperature measured by an overcharge test.
Fig. 16 is a graph showing an increase in a battery temperature measured by an overcharge test.
Fig. 17 is a graph showing a resistivity of a positive electrode measured by a battery disassembly experiment.
Fig. 18 is a graph showing air resistance of a separator measured by a battery disassembly experiment.

### MODE FOR CARRYING OUT THE INVENTION

A positive electrode for a nonaqueous electrolyte secondary battery according to the present invention is provided with a porous positive electrode active material layer that contains a positive electrode active material, wherein the positive electrode active material layer is formed so that a logarithmic differential pore volume distribution curve thereof, which shows the relation between pore diameter and pore volume of pores in the positive electrode active material layer, is a single-peak type curve, the positive electrode active material has an olivine-type crystal structure, the distribution curve is obtained by measuring a pore distribution of the positive electrode active material layer using a mercury porosimeter, the distribution curve has the single peak having a full width at half maximum of from 0.001 µm to 0.05 µm inclusive, and the sum of the pore volumes of the pores within a pore diameter range corresponding to the full width at half maximum is 70% or more of the total pore volume.

Preferably, in the positive electrode for a nonaqueous electrolyte secondary battery according to the present invention, a mode diameter of pores in the positive electrode active material layer is from 0.04 µm to 0.1 µm inclusive.

According to this configuration, the fluidity of a nonaqueous electrolyte in the pores in the positive electrode active material layer can be ensured by setting the mode diameter to be equal to or larger than 0.04 µm, and the surface area of the positive electrode active material layer can be increased by setting the mode diameter to be equal to or smaller than 0.1 µm. Preferably, in the positive electrode for a nonaqueous electrolyte secondary battery according to the present invention, the positive electrode active material layer includes a carbonaceous coating film formed on the positive electrode active material.

According to this configuration, electrons generated by an electrode reaction can be collected through the carbonaceous coating film, whereby charging/discharging characteristics of the battery can be improved.

Preferably, the positive electrode for a nonaqueous electrolyte secondary battery according to the present invention further includes a current collector, and the positive electrode active material layer is formed on the current collector.

According to this configuration, electrons generated by the electrode reaction can be collected through the current collector, whereby charging/discharging characteristics of the battery can be improved.

In the positive electrode for a nonaqueous electrolyte secondary battery according to the present invention, the positive electrode active material has an olivine-type crystal structure.

This configuration can prevent oxygen in a crystal from being released due to the decomposition of the positive electrode active material by overcharge or the like. Thus, safety of the battery can be improved.

The present invention also provides a nonaqueous electrolyte secondary battery comprising the positive electrode according to the present invention, a negative electrode, a separator interposed between the positive electrode and the negative electrode, a nonaqueous electrolyte, and a battery case storing the positive electrode, the negative electrode, the separator, and the nonaqueous electrolyte.

When being in an overcharge condition, the nonaqueous electrolyte secondary battery according to the present invention can raise the internal resistance of the positive electrode to prevent a charging current from flowing between the positive electrode and the negative electrode. Thus, abnormal heat generation in an overcharge condition can be suppressed, whereby safety of the nonaqueous electrolyte secondary battery can be improved.

Preferably, in the nonaqueous electrolyte secondary battery according to the present invention, the nonaqueous electrolyte contains a carbonate compound as a solvent.

According to this configuration, a resistance coating film can be formed in the positive electrode active material layer by a reaction of forming a coating film derived from an electrolyte component due to the charging current in an overcharge condition.

Hereinafter, an embodiment of the present invention will be described with reference to the drawings. Structures shown in the drawings or the following descriptions are just exemplifications and the scope of the present invention is not limited thereto.

### Positive electrode for nonaqueous electrolyte secondary battery

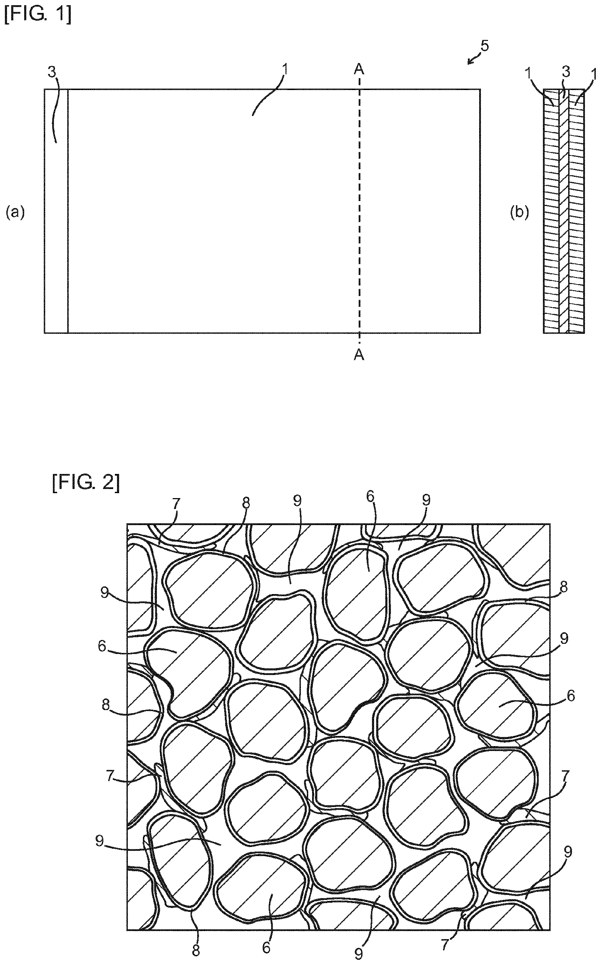

Fig. 1 (a) is a schematic plan view of a positive electrode for a nonaqueous electrolyte secondary battery of the present embodiment, and Fig. 1 (b) is a schematic cross sectional view of the positive electrode taken along a dotted line A-A in Fig. 1 (a). Fig. 2 is a schematic cross sectional view showing an internal structure of a positive electrode active material included in the positive electrode for a nonaqueous electrolyte secondary battery of the present embodiment.

A positive electrode 5 for a nonaqueous electrolyte secondary battery of the present embodiment includes a porous positive electrode active material layer 1 containing a positive electrode active material 6, wherein the positive electrode active material layer 1 is formed so that the logarithmic differential pore volume distribution curve thereof, which shows the relation between pore diameter and pore volume of pores 9 in the positive electrode active material layer 1, is a single-peak type curve, the positive electrode active material has an olivine-type crystal structure, the distribution curve is obtained by measuring a pore distribution of the positive electrode active material layer using a mercury porosimeter, the distribution curve has the single peak having a full width at half maximum of from 0.001 µm to 0.05 µm inclusive, and the sum of the pore volumes of the pores 9 within the pore diameter range corresponding to the full width at half maximum is 70% or more of the total pore volume.

The positive electrode 5 for a nonaqueous electrolyte secondary battery according to the present embodiment may have a positive electrode current collector 3.

The positive electrode 5 for a nonaqueous electrolyte secondary battery according to the present embodiment will be described below.

*1*. *Positive electrode for nonaqueous electrolyte secondary battery* The positive electrode 5 for a nonaqueous electrolyte secondary battery is a positive electrode constituting a nonaqueous electrolyte secondary battery or a positive electrode used for manufacturing a nonaqueous electrolyte secondary battery.

### 2. Positive electrode active material layer

The positive electrode active material layer 1 contains a positive electrode active material 6. The content of the positive electrode active material 6 in the positive electrode active material layer 1 can be set to be from 80 wt.% to 99 wt.% inclusive, for example.

The positive electrode active material layer 1 may also include a conductive auxiliary agent 7, a binder, a carbonaceous coating film 8 formed on the positive electrode active material 6. The positive electrode active material 6 is a material directly involved in an electrode reaction in the positive electrode.

The positive electrode active material 6 is a material having an olivine-type crystal structure, such as LiFePO4 or LixMyPO4 (wherein 0.05 ≤ x ≤ 1.2, 0 ≤ y ≤ 1, and M is at least one or more elements selected from Fe, Mn, Cr, Co, Cu, Ni, V, Mo, Ti, Zn, Al, Ga, Mg, B, and Nb).

In addition, the positive electrode active material is preferably a material in which a potential at which the crystal structure collapses in overcharge is higher than a potential at which a coating resistance film is formed in the positive electrode active material layer due to decomposition of the nonaqueous electrolyte in overcharge.

In addition, the positive electrode active material layer 1 may include one kind of the above positive electrode active materials alone or may include two or more kinds of the above positive electrode active materials.

As long as it has an olivine-type crystal structure, the positive-electrode active material 6 can also be a sodium transition-metal composite oxide, and examples of such material include an oxide represented by NabM2cSi12O30 (M2 is one or more kinds of transition metal element, 2 ≤ b ≤ 6, 2 ≤ c ≤ 5) such as Na6Fe2Si12O30 or Na2Fe5Si12O30; an oxide represented by NadM3eSi6O18 (M3 is one or more kinds of transition metal element, 3 ≤ d ≤ 6, 1 ≤ e ≤ 2) such as Na2Fe2Si6O18 or Na2MnFeSi6O18; an oxide represented by NafM4gSi2O6 (M4 is one or more elements selected from a transition metal element, Mg, and Al, 1 ≤ f ≤ 2, 1 ≤ g ≤ 2) such as Na2FeSiO6; a phosphate such as NaFePO4 or Na3Fe2(PO4)3; a borate such as NaFeBO4 or Na3Fe2(BO4)3; a fluoride represented by NahM5F6 (M5 is one or more transition metal elements, 2 ≤ h ≤ 3) such as Na3FeF6 or Na2MnF6.

In addition, the positive electrode active material layer 1 may include one kind of the above positive electrode active materials alone or may include two or more kinds of the above positive electrode active materials.

As the conductive auxiliary agent 7, acetylene black, furnace black and carbon black can be used. The inclusion of the conductive auxiliary agent 7 in the positive electrode active material layer 1 enables efficient collection of electrons generated by the electrode reaction.

Examples of the binder include polyvinylidene fluoride (PVdF) and polytetrafluoroethylene (PTFE). The inclusion of the binder in the positive electrode active material layer 1 can prevent the porous structure of the positive electrode active material layer 1 from collapsing.

The carbonaceous coating film 8 can be an amorphous carbon coating film. The inclusion of the carbonaceous coating film 8 in the positive electrode active material layer 1 enables efficient collection of electrons generated by the electrode reaction.

Note that the positive electrode active material layer 1 can be formed in such a way that, for example, a positive electrode active material paste is prepared by adding a solvent to positive electrode active material powders, the conductive auxiliary agent 7, and the binder, and the prepared paste is applied onto the positive electrode current collector 3. Examples of the solvent used to prepare the paste include dimethylformamide, N-methylpyrrolidone, isopropanol, and toluene.

The positive electrode active material layer 1 may have a layered structure, and may be formed to have substantially a certain thickness. The thickness of the positive electrode active material layer 1 can be set to be from 1 µm to 300 µm inclusive.

In addition, the positive electrode active material layer 1 can be formed on a sheet-type positive electrode current collector 3. The positive electrode active material layer 1 may be formed on both main surfaces of the sheet-type positive electrode current collector 3, or may be formed on one of the main surfaces of the sheet-type positive electrode current collector 3. For example, the positive electrode active material layer 1 can be formed on both main surfaces of the positive electrode current collector 3 as in the positive electrode 5 shown in Figs. 1(a) and 1(b).

The positive electrode active material layer 1 has a porous structure, and has pores 9 inside. Thus, the pores 9 in the positive electrode active material layer 1 can be filled with a nonaqueous electrolyte 15, which can promote the electrode reaction in the pores 9. Accordingly, the surface area of the positive electrode active material layer 1 on which the electrode reaction progresses can be increased, and therefore, battery characteristics can be enhanced. The positive electrode active material layer 1 can be configured to include the porous structure as shown in the schematic cross sectional view of Fig. 2, for example.

The positive electrode active material layer 1 is formed so that the logarithmic differential pore volume distribution curve thereof, which shows the relation between pore diameter and pore volume of the pores 9 in the positive electrode active material layer 1, is a single-peak type curve. The distribution curve has the single peak having a full width at half maximum (FWHM) of from 0.001 µm to 0.05 µm inclusive, and the sum of the pore volumes of the pores within the pore diameter range corresponding to the full width at half maximum is 70% or more of the total pore volume. According to the configuration described above, the positive electrode active material layer 1 is configured to have a porous structure having a high homogeneity.

When the positive electrode active material layer 1 has the porous structure having a high homogeneity described above, the internal resistance of the positive electrode 5 can be raised in overcharge, which can prevent a charging current in overcharge from flowing between the positive electrode and the negative electrode. Therefore, abnormal heat generation in overcharge can be suppressed, whereby safety of the nonaqueous electrolyte secondary battery 30 can be enhanced. The reason why a current flowing between the positive electrode and the negative electrode can be suppressed due to the rise in the internal resistance of the positive electrode 5 is unclear. However, it is considered that, when a reaction of forming a resistance coating film derived from an electrolyte solution component due to a charging current in overcharge progresses in the positive electrode active material layer 1 having a porous structure with a high homogeneity, a reaction substance is uniformly supplied to a reaction section, and therefore, a resistance coating film is uniformly formed.

Notably, the positive electrode active material layer 1 having the porous structure with a high homogeneity can be manufactured by using, as a raw material, positive electrode active material powders with less variation in particle diameter. In addition, the positive electrode active material layer 1 having the porous structure with a high homogeneity can also be manufactured by using a positive electrode active material paste which is sufficiently kneaded to reduce variation in particle diameter of positive electrode active material particles.

The positive electrode active material layer 1 can be formed such that the mode diameter of pores 9 in the positive electrode active material layer 1 is from 0.04 µm to 0.1 µm inclusive. The fluidity of a nonaqueous electrolyte in the pores 9 in the positive electrode active material layer 1 can be ensured by setting the mode diameter to be equal to or larger than 0.04 µm. In addition, the surface area of the positive electrode active material layer 1 can be increased by setting the mode diameter to be equal to or smaller than 0.1 µm.

Note that the logarithmic differential pore volume distribution curve is obtained by measuring the pore distribution of the positive electrode active material layer 1 using a mercury porosimeter.

The single-peak curve is a curve having one single peak.

The mode diameter means a pore diameter at which the logarithmic differential pore volume is the maximum. Note that the height of the main peak at the mode diameter is defined as a peak height.

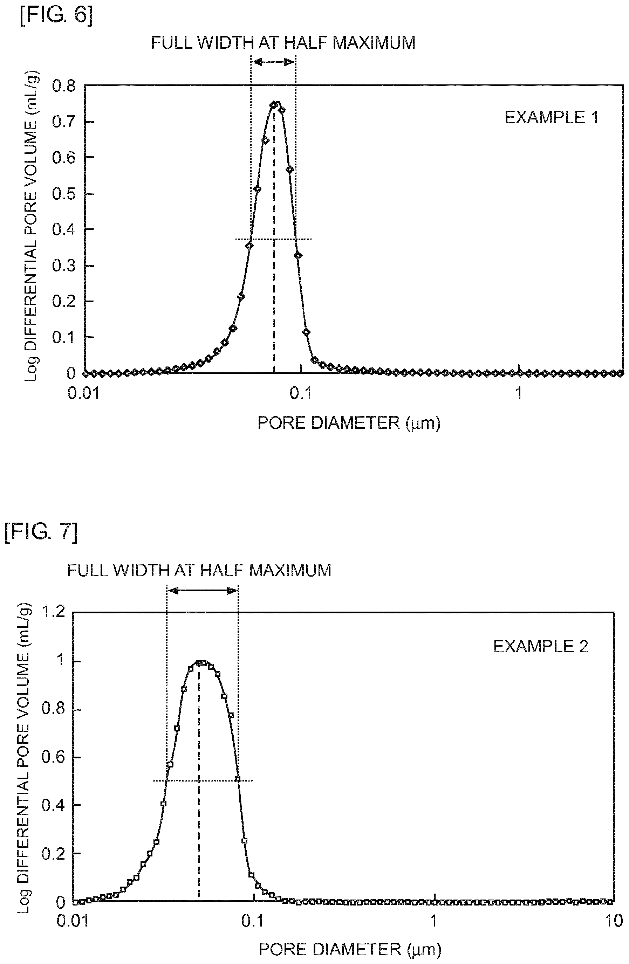

The full width at half maximum (FWHM) is a peak width at half the peak height of the main peak (see Fig. 6, etc.).

The total pore volume is a sum of the pore volumes of all pores.

### 3. Positive electrode current collector

The positive electrode current collector 3 is a member that collects electrons generated by the electrode reaction in the positive electrode active material layer 1. The positive electrode current collector 3 may have a sheet shape, for example. Further, the positive electrode current collector 3 may be a metal foil or an aluminum foil. Since the positive electrode 5 includes the positive electrode current collector 3, the internal pressure of the battery can be reduced.

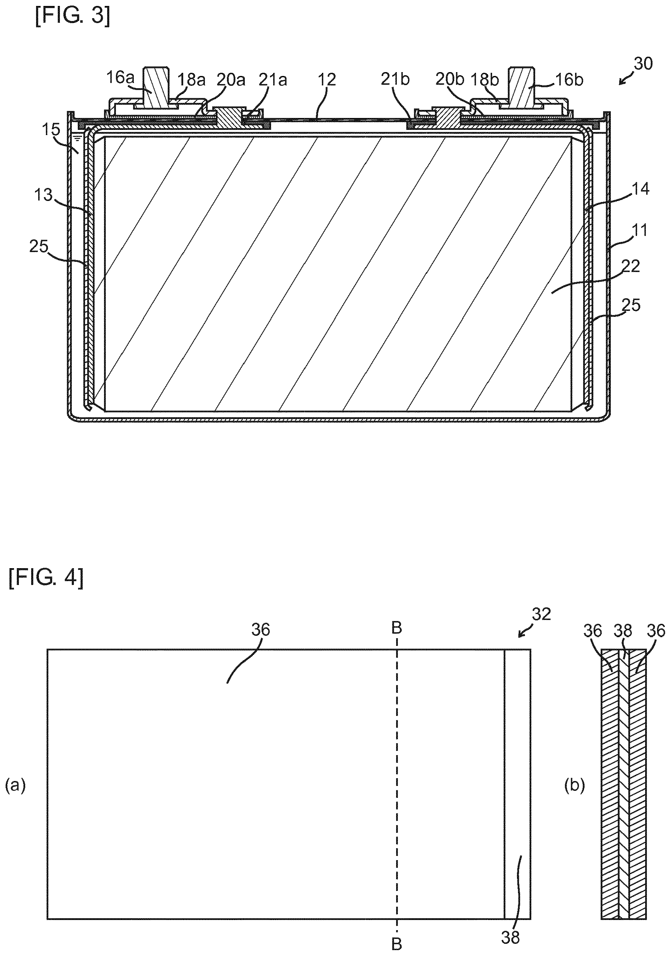

The positive electrode current collector 3 may have a portion where the positive electrode active material layer 1 is not formed on the surface thereof. Moreover, the positive electrode current collector 3 can be connected to a positive electrode connection member 13 on this portion. The portion of the positive electrode current collector 3 connected to the positive electrode connection member 13 can be formed as in the positive electrode 5 shown in Fig. 1(a). Note that the positive electrode connection member 13 can be electrically connected to an external connection terminal 18a of the positive electrode as in the nonaqueous electrolyte secondary battery 30 shown in Fig. 3.

### Nonaqueous electrolyte secondary battery

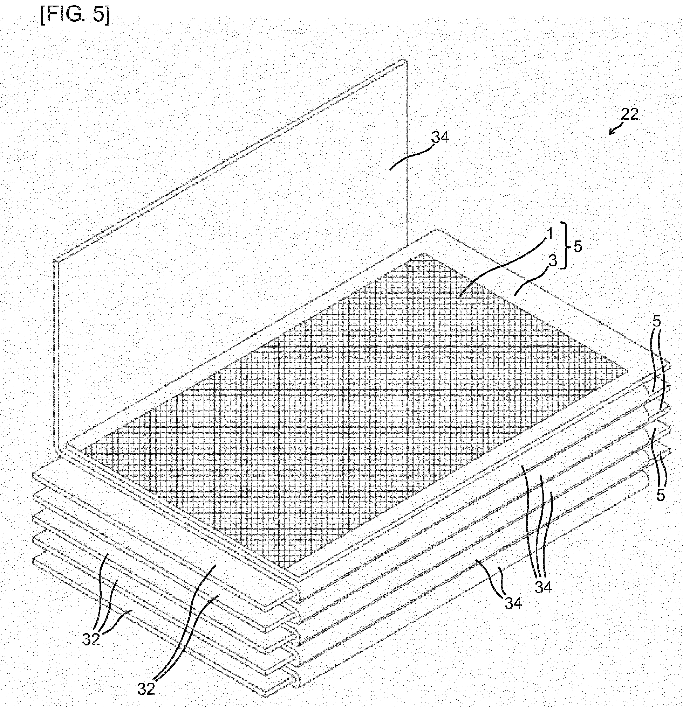

Fig. 3 is a schematic cross sectional view of the nonaqueous electrolyte secondary battery of the present embodiment. Fig. 4 (a) is a schematic plan view of the negative electrode included in the nonaqueous electrolyte secondary battery of the present embodiment, and Fig. 4 (b) is a schematic cross sectional view of the negative electrode taken along a dotted line B-B in Fig. 4(a). Fig. 5 is a schematic perspective view showing the configuration of a power generation element included in the nonaqueous electrolyte secondary battery of the present embodiment.

The nonaqueous electrolyte secondary battery 30 according to the present embodiment includes the positive electrode 5, a negative electrode 32, a separator 34 interposed between the positive electrode 5 and the negative electrode 32, a nonaqueous electrolyte 15, and a battery case 11 storing the positive electrode 5, the negative electrode 32, the separator 34, and the nonaqueous electrolyte 15, wherein the positive electrode 5 is provided with the porous positive electrode active material layer 1 that contains the positive electrode active material 6, wherein the positive electrode active material layer 1 is formed so that the logarithmic differential pore volume distribution curve thereof, which shows the relation between pore diameter and pore volume of the pores 9 in the positive electrode active material layer 1, is a single-peak type curve, the distribution curve has a main peak having a full width at half maximum of from 0.001 µm to 0.05 µm inclusive, and the sum of the pore volumes of the pores within the pore diameter range corresponding to the full width at half maximum is 70% or more of the total pore volume.

The nonaqueous electrolyte secondary battery 30 according to the present embodiment will be described below.

### 1. Nonaqueous electrolyte secondary battery

The nonaqueous electrolyte secondary battery 30 is a battery including a positive electrode, a negative electrode, and a nonaqueous electrolyte. The nonaqueous electrolyte secondary battery 30 is a lithium ion secondary battery, a sodium ion secondary battery, or the like, for example.

### 2. Positive electrode, negative electrode, separator

The nonaqueous electrolyte secondary battery 30 includes the positive electrode 5 for a nonaqueous electrolyte secondary battery. Since the positive electrode 5 for a nonaqueous electrolyte secondary battery has been described above, the description thereof will be omitted. Note that the positive electrode 5 can compose the power generation element 22 shown in Fig. 5 together with the negative electrode 32 and the separator 34.

The negative electrode 32 includes a porous negative electrode active material layer 36 containing a negative electrode active material. The negative electrode 32 also includes a negative electrode current collector 38.

The negative electrode active material layer 36 can contain a negative electrode active material, a conductive agent, a binder, and the like.

Examples of the material for the negative electrode active material include graphite, partially graphitized carbon, hard carbon, LiTiO4, Sn, and Si. The negative electrode active material layer 36 may contain one kind of the above negative electrode active materials alone or may contain two or more kinds of the above negative electrode active materials.

The negative electrode active material layer 36 can be formed on the sheet-type negative electrode current collector 38. The negative electrode active material layer 36 may be formed on both main surfaces of the sheet-type negative electrode current collector 38, or may be formed on one of the main surfaces of the sheet-type negative electrode current collector 38. The negative electrode active material layer 36 can be formed on both main surfaces of the negative electrode current collector 38 as in the negative electrode 32 shown in Figs. 4(a) and 4(b). In addition, the negative electrode 32 can compose the power generation element 22 shown in Fig. 5 together with the positive electrode 5 and the separator 34.

Note that the negative electrode active material layer 36 can be formed in such a way that, for example, a negative electrode active material paste is prepared by adding a solvent to negative electrode active material powders, a conductive agent, and a binder, and the prepared paste is applied onto the negative electrode current collector 38.

The negative electrode current collector 38 is a member that collects electrons generated by the electrode reaction in the negative electrode active material layer 36. The negative electrode current collector 38 may have a sheet shape, for example. Further, the negative electrode current collector 38 may be a metal foil or a copper foil. In addition, the negative electrode current collector 38 can be electrically connected to an external connection terminal 18b of the negative electrode.

The separator 34 has a sheet shape, and is interposed between the positive electrode 5 and the negative electrode 32. In addition, the separator 34 can compose the power generation element 22 shown in Fig. 5 together with the positive electrode 5 and the negative electrode 32. The formation of the separator 34 can prevent a short-circuit current from flowing between the positive electrode 5 and the negative electrode 32.

The separator 34 is not particularly limited, so long as it can prevent a short-circuit current from flowing and transmit ions that conduct between the positive electrode and the negative electrode. For example, a microporous film of polyolefin can be used.

The separator 34 may be provided with a shut-down mechanism that melts the separator 34 at a certain temperature to close (shut down) the pores to block the path for the conductive ions between the positive electrode and the negative electrode. This configuration can prevent the nonaqueous electrolyte secondary battery 30 from abnormally generating heat.

The power generation element 22 can be configured such that the positive electrode 5 and the negative electrode 32 are alternately disposed in valley folds of the separator 34 folded in zigzag, as in the power generation element 22 shown in Fig. 5.

### 3. Battery case

The battery case 11 is a container storing the positive electrodes 5, the negative electrodes 32, the separator 34, and the nonaqueous electrolyte 15. The material of the battery case 11 may be a hard material or a soft material. Specific examples of the material of the battery case 11 include a metal material such as aluminum, aluminum alloy, iron, iron alloy, or stainless, a rigid plastic, and a laminated pouch. The material of the battery case 11 may be a metal material plated by nickel, tin, chromium, or zinc.

The battery case 11 may have an opening closed by a lid member 12. According to this configuration, the power generation element 22 can be stored in the battery case 11.

In addition, the battery case 11 or the lid member 12 may be provided with a safety valve that is opened when the internal pressure of the battery rises. Thus, when the battery is in an abnormal condition due to abnormal heat generation by overcharge or the like, the safety valve cleaves to release the increased internal pressure of the battery, so that the explosion of the battery can be prevented.

### 4. Nonaqueous electrolyte

The nonaqueous electrolyte 15 is stored in the battery case 11 to serve as an ion conduction medium between the positive electrode and the negative electrode. In addition, the nonaqueous electrolyte 15 includes a nonaqueous solvent, and an electrolyte salt dissolved in the nonaqueous solvent. Note that the nonaqueous electrolyte 15 may be liquid or gel.

In addition, the nonaqueous electrolyte 15 may be an electrolyte that forms a resistance coating film in the positive electrode active material layer by the charging current in overcharge. Further, the resistance coating film may be a film that interferes with the progress of the battery reaction. Moreover, the resistance coating film may have insulating property.

Nonaqueous solvent contained in the nonaqueous electrolyte 15 include a carbonate compound (cyclic carbonate compound, chain carbonate compound, etc.). Two or more kinds of these solvents can be used as a mixture. Among these, especially a solvent prepared by mixing a cyclic carbonate compound and a chain carbonate compound is preferable.

Examples of the electrolyte salt contained in the nonaqueous electrolyte 15 include LiCF3SO3, LiAsF6, LiClO4, LiBF4, LiPF6, LiBOB, LiN(CF3SO2)2, and LiN(C2F5SO2).

In addition, the nonaqueous electrolyte 15 may contain an additive agent such as VC (vinylene carbonate), PS (propane sultone), VEC (vinyl ethyl carbonate), PRS (propene sultone), fluorinated chain or cyclic carbonate (for example, at least one H on 4- and 5-position of ethylene carbonate is substituted with F or alkyl fluoride), or a flame retardant. The nonaqueous electrolyte 15 may contain one kind of these additive agents alone or two or more kinds as a mixture.

### Pore distribution measurement

Five positive electrodes according to Examples 1 to 3 and Comparative Examples 1 and 2 were manufactured, and pore distribution measurement for positive electrode active material layers in these positive electrodes was conducted. Notably, the positive electrodes according to Examples 1 to 3 and Comparative Examples 1 and 2 are different from one another in that positive electrode active material powders used for these positive electrodes have different average particle diameter and different variation in particle diameter.

Firstly, lithium iron phosphate (LiFePO4) powders (positive electrode active material powders) covered by conductive carbon on their surfaces, acetylene black (conductive auxiliary agent), and polyvinylidene fluoride (PVDF ((CH2CF2)n)) (binder) were mixed to have 88 to 95 wt.% of the positive electrode active material powders and 3.5 to 4.5 wt.% of the conductive auxiliary agent. N-methylpyrrolidone (NMP) was added to this mixture powders and the resultant was kneaded to prepare a positive electrode active material paste.

This positive electrode active material paste was applied onto an aluminum foil (current collector), and the coating film was dried to form a positive electrode active material layer on the current collector. Thus, the positive electrodes in Examples 1 to 3 and Comparative Examples 1 and 2 were manufactured.

The positive electrode active material layers included in the manufactured positive electrodes in Examples 1 to 3 and Comparative Examples 1 and 2 were subjected to pore distribution measurement by use of a mercury porosimeter.

It is to be noted that a full width at half maximum was calculated such that the logarithmic differential pore volume at a mode diameter was defined as a peak height.

The positive electrode in Example 1 was manufactured by using positive electrode active material powders having an average particle diameter of 0.62 µm and having less variation in particle diameter. Fig. 6 shows the measurement result of the pore distribution measurement for the positive electrode active material layer included in the positive electrode in Example 1. As shown in Fig. 6, the logarithmic differential pore volume distribution curve was a single-peak type curve. Further, the mode diameter was 0.0737 µm, and the full width at half maximum of the main peak was 0.0369 µm. In addition, the sum of the pore volumes of the pores within the pore diameter range corresponding to the full width at half maximum was 72.71% of the total pore volume.

The positive electrode in Example 2 was manufactured by using positive electrode active material powders having an average particle diameter of 11.5 µm and having less variation in particle diameter. Fig. 7 shows the measurement result of the pore distribution measurement for the positive electrode active material layer included in the positive electrode in Example 2. As shown in Fig. 7, the logarithmic differential pore volume distribution curve was a single-peak type curve. Further, the mode diameter was 0.0489 µm, and the full width at half maximum of the main peak was 0.0481 µm. In addition, the sum of the pore volumes of the pores within the pore diameter range corresponding to the full width at half maximum was 75.38% of the total pore volume.

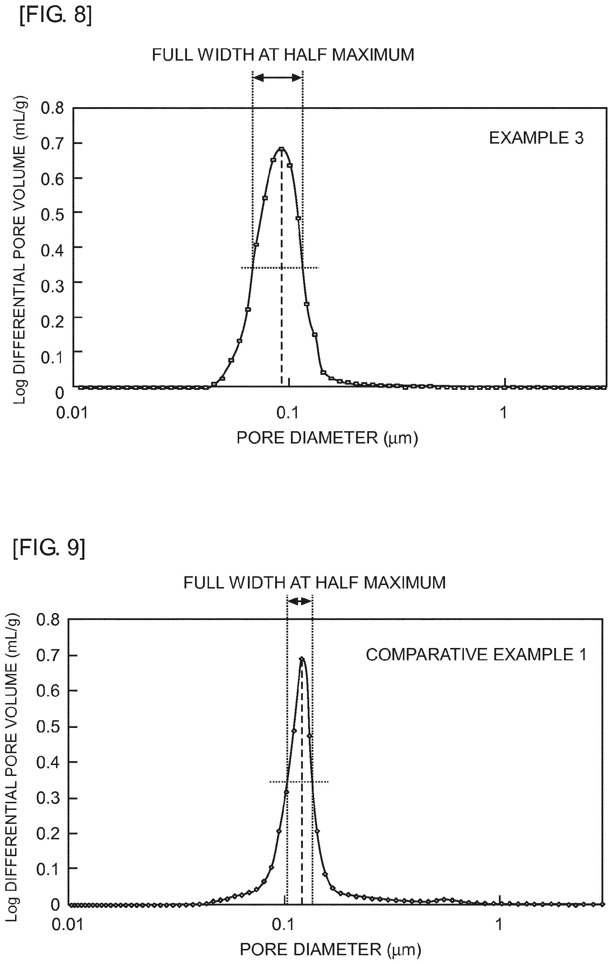

The positive electrode in Example 3 was manufactured by using positive electrode active material powders which were prepared by granulating powders, having an average diameter of 0.62 µm and having less variation in particle diameter, to have an average diameter of 5 µm. Fig. 8 shows the measurement result of the pore distribution measurement for the positive electrode active material layer included in the positive electrode in Example 3. As shown in Fig. 8, the logarithmic differential pore volume distribution curve was a single-peak type curve. Further, the mode diameter was 0.0923 µm, and the full width at half maximum of the main peak was 0.048 µm. In addition, the sum of the pore volumes of the pores within the pore diameter range corresponding to the full width at half maximum was 70.59% of the total pore volume.

The positive electrode in Comparative Example 1 was manufactured by using positive electrode active material powders having an average particle diameter of 0.497 µm and having large variation in particle diameter. Fig. 9 shows the measurement result of the pore distribution measurement for the positive electrode active material layer included in the positive electrode in Comparative Example 1. As shown in Fig. 9, the logarithmic differential pore volume distribution curve was a single-peak type curve. Further, the mode diameter was 0.1199 µm, and the full width at half maximum of the main peak was 0.0322 µm. In addition, the sum of the pore volumes of the pores within the pore diameter range corresponding to the full width at half maximum was 56.75% of the total pore volume.

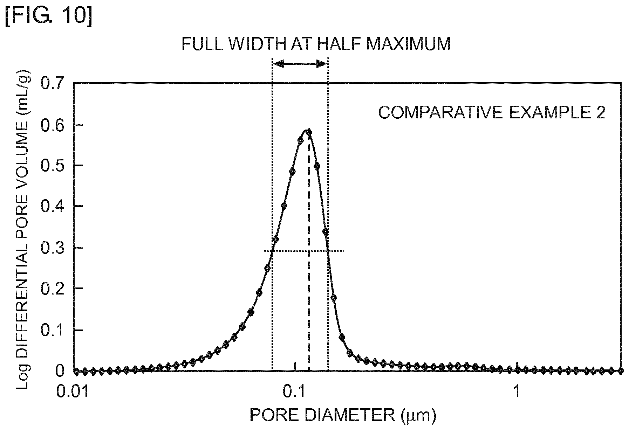

The positive electrode in Comparative Example 2 was manufactured by using positive electrode active material powders which were prepared by granulating powders, having large variation in particle diameter, to have an average diameter of 15.66 µm. Fig. 10 shows the measurement result of the pore distribution measurement for the positive electrode active material layer included in the positive electrode in Comparative Example 2. As shown in Fig. 10, the logarithmic differential pore volume distribution curve was a single-peak type curve. Further, the mode diameter was 0.1135 µm, and the full width at half maximum of the main peak was 0.0616 µm. In addition, the sum of the pore volumes of the pores within the pore diameter range corresponding to the full width at half maximum was 61.97% of the total pore volume.

The results of the pore distribution measurement are shown in Table 1.

**[Table 1]**

| | Mode diameter (µm) | Full width at half maximum (µm) | Pore volume percentage at full width at half maximum to total pore volume (%) |
|---|---|---|---|
| Example 1 | 0.0737 | 0.0369 | 72.71 |
| Example 2 | 0.0489 | 0.0481 | 75.38 |
| Example 3 | 0.0923 | 0.0480 | 70.59 |
| Comparative Example 1 | 0.1199 | 0.0322 | 56.75 |
| Comparative Example 2 | 0.1135 | 0.0616 | 61.97 |

In each of Examples 1 to 3, the sum of the pore volumes of the pores within the pore diameter range corresponding to the full width at half maximum of the main peak in the logarithmic differential pore volume distribution curve is 70% or more of the total pore volume. Therefore, it is found that the positive electrode active material layers included in the positive electrodes in Examples 1 to 3 have a porous structure having a high homogeneity.

In each of Comparative Examples 1 and 2, the sum of the pore volumes of the pores within the pore diameter range corresponding to the full width at half maximum of the main peak in the logarithmic differential pore volume distribution curve is 62% or lower of the total pore volume. Therefore, it is found that the positive electrode active material layers included in the positive electrodes in Comparative Examples 1 and 2 have a porous structure having a lower homogeneity than Examples 1 to 3.

### Overcharge test

Five lithium ion secondary batteries in Examples 1 to 3 and Comparative Examples 1 and 2 were manufactured, and an overcharge test was conducted to these batteries. Note that the battery in Example 1 was manufactured by using the positive electrode in Example 1, the battery in Example 2 was manufactured by using the positive electrode in Example 2, the battery in Example 3 was manufactured by using the positive electrode in Example 3, the battery in Comparative Example 1 was manufactured by using the positive electrode in Comparative Example 1, and the battery in Comparative Example 2 was manufactured by using the positive electrode in Comparative Example 2. The other configurations were the same in these batteries. A power generation element formed by stacking the positive electrode in each of Examples 1 to 3 and Comparative Examples 1 and 2, a separator formed from polyolefin (shut-down temperature: around 120 C), and a carbonaceous negative electrode was placed in a battery case provided with a safety valve on a lid member, and a nonaqueous electrolyte solution was injected into the battery case. Thus, the lithium ion secondary batteries in Examples 1 to 3 and Comparative Examples 1 and 2 were manufactured. As the nonaqueous electrolyte solution, 1 M of LiPF6 electrolyte solution containing carbonate solvent (EC:DEC:EMC = 1:1:1), additives (1 part by weight of VC and 1 part by weight of FEC with respect to 100 parts by weight of electrolyte solution), and LiPF6 as an electrolyte was used.

In the overcharge test, CCCV (Constant-Current-Constant-Voltage) charging was conducted with a charging current being set as 50 A which was 1 ItA (1 CA) and a test upper-limit voltage being set as 10 V. In the overcharge test, a voltage between an external connection terminal of the positive electrode and an external connection terminal of the negative electrode and a current flowing between these external connection terminals were measured. In addition, in the overcharge test, a temperature was measured in the state in which a thermocouple was mounted to the battery case.

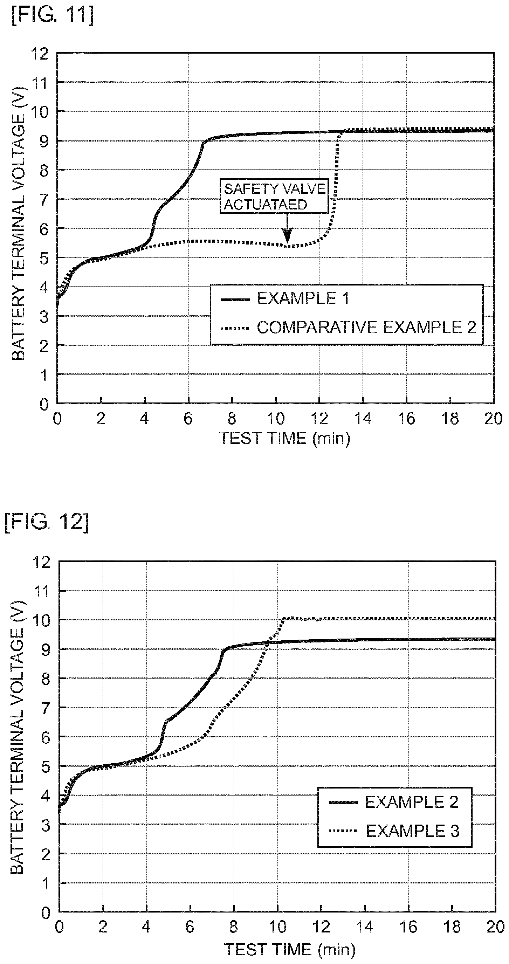

The results of the overcharge test for the battery in Example 1 and the battery in the Comparative Example 2 are shown in Figs. 11, 13, and 15. In addition, the results of the overcharge test for the batteries in Examples 2 and 3 are shown in Figs. 12, 14, and 16. Note that a horizontal axis in each of Figs. 11 to 16 indicates a test time counted from the point (0 minute) at which the battery enters in an overcharge condition.

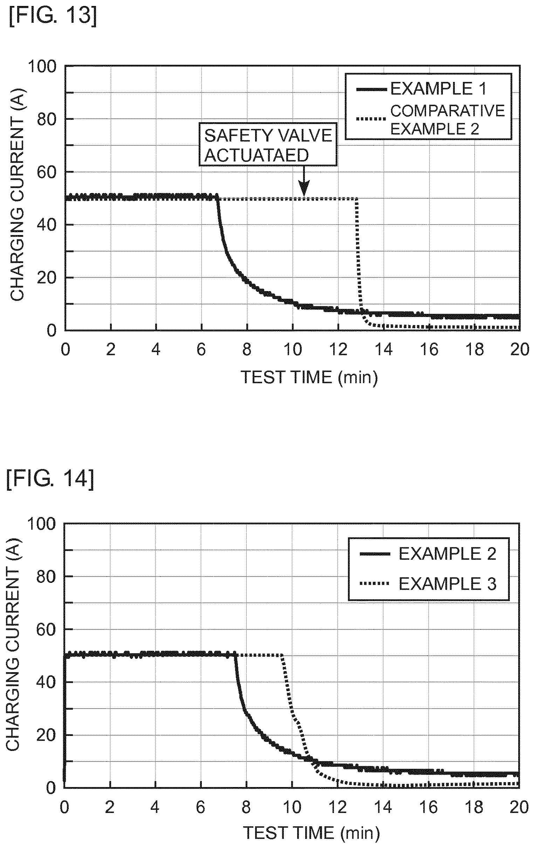

When the battery in Comparative Example 2 was continuously charged in an overcharge condition, the voltage between the positive electrode and the negative electrode increased to about 5.5 V, and then, became almost constant, as indicated by a voltage curve in Fig. 11. Then, the safety valve was opened at the time of around 10 minutes and 30 seconds, and the voltage between the positive electrode and the negative electrode reached the test upper-limit voltage at around 13 minutes. In addition, in the battery in Comparative Example 2, the current between the positive electrode and the negative electrode almost stopped flowing at around 13 minutes as indicated by a current curve in Fig. 13.

It is considered that, at around 10 minutes and 30 seconds, the internal pressure of the battery increased due to decomposition gas or evaporation gas of the electrolyte solution generated by the increase in the battery internal temperature caused by the current flowing between the positive electrode and the negative electrode in the overcharge condition, and thus, the safety valve was opened. It is also considered that, at around 13 minutes, since the overcharge condition was continued even after the safety valve was opened, the battery internal temperature kept on increasing to reach the shut-down temperature of the separator, by which the pores in the separator were closed to inhibit the flow of the current, and thus, the rapid reduction in the current value and the rapid increase in the voltage were observed.

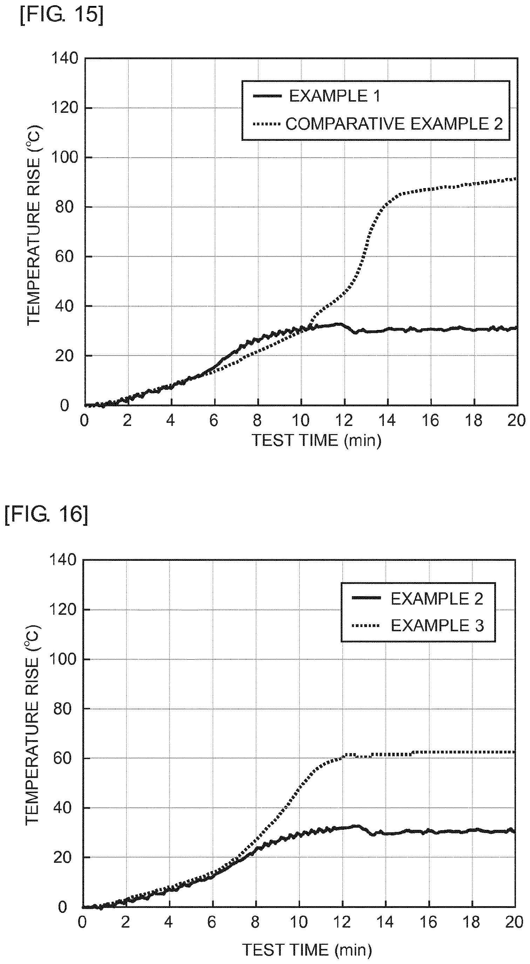

The graph in Fig. 15 shows the temperature measured in the state in which the thermocouple is provided to the battery case, so that it does not exactly show the temperature rise in the battery. In the measurement of the temperature of the battery case, when the temperature of the battery case rises, this temperature rise may be measured later or a temperature lower than the battery internal temperature may be measured due to radiation in the battery case. Even so, it is understood from Fig. 15 that the battery continuously generates heat after the time at 10 minutes. Since the temperature rapidly rises at the time slightly after 12 minutes, and the temperature rise becomes gentle at around 14 minutes, the pores in the separator are considered to be closed at around 14 minutes.

Note that, in the battery in Comparative Example 1, the safety valve was also opened and the similar voltage/current behavior was observed.

When the batteries in Examples 1 to 3 were continuously charged in an overcharge condition, the voltage between the positive electrode and the negative electrode reached the test upper-limit voltage without opening the safety valve, as indicated by voltage curves in Figs. 11 and 12.

The voltage between the positive electrode and the negative electrode gradually increased, and reached the test upper-limit voltage at the test time of around 7 to 10 minutes. It is found that the voltage increased gradually in contrast to the battery in Comparative Example 2.

Further, in each of the batteries in Examples 1 to 3, when the voltage between the positive electrode and the negative electrode reached the test upper-limit voltage at around 7 to 10 minutes, the current flowing between the positive electrode and the negative electrode gradually lowered, and almost stopped flowing at the test time of 12 to 14 minutes, as indicated by the current curves in Figs. 13 and 14. These batteries showed a behavior different from the phenomenon in which a current rapidly stopped flowing as in the case where the separator was shut down.

Accordingly, it is found that, when the battery in each of Examples 1 to 3 was continuously charged in an overcharge condition, the internal resistance of the battery gradually increased, and the current hardly flows between the positive electrode and the negative electrode at around 12 to 14 minutes.

Moreover, in each of the batteries in Examples 1 to 3, the battery temperature gradually increased until 10 to 12 minutes, and after that, the battery temperature became almost constant, as indicated by temperature rise curves in Figs. 15 and 16. In comparison to the temperature in Comparative Example 2, the highest temperature was low, that is, about 30 °C in Examples 1 and 2 and about 60 °C in Example 3, showing that the battery internal temperature did not reach the shut-down temperature of the separator.

### Battery disassembly experiment after overcharge test

The batteries which were subjected to the overcharge test were disassembled, and resistivity measurement of the positive electrodes and air impermeability test for the separators were conducted.

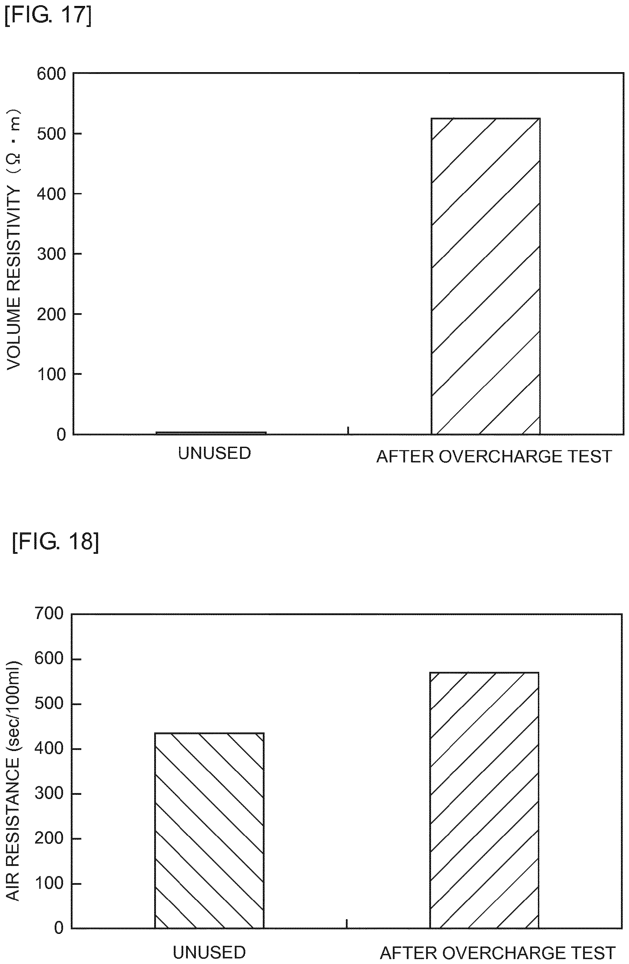

The positive electrode was removed from the battery in Example 1 after the overcharge test, and the resistivity of the positive electrode was measured using a four-terminal method. The result is shown in Fig. 17. For comparison, Fig. 17 also shows the result of the measurement of the resistivity of an unused positive electrode which has not yet been incorporated into the battery. As shown in Fig. 17, the resistivity of the positive electrode after the overcharge test was 500 Ω·m or more, which indicates that the resistivity is significantly increased from the resistivity of the unused positive electrode.

From the above, it is understood that the increase in the internal pressure of the battery in Example 1 in the overcharge test results from the increase in the internal pressure of the positive electrode. In addition, it is considered that the internal pressure of the positive electrode was similarly increased in each of the batteries in Examples 2 and 3.

Fig. 18 shows the result of the air impermeability test for the separator removed from the battery after the overcharge test in Example 1. For comparison, Fig. 18 also shows the result of the air impermeability test for an unused separator which has not yet been incorporated in the battery.

The air impermeability test was conducted by use of an air impermeability tester (Gurley tester). In this test, a time required for permeation of air having a volume specified per a unit area is measured.

As shown in Fig. 18, the air resistance of the separator after the overcharge test was about 1.3 times the air resistance of the unused separator.

From the result in which the air resistance of the separator was not so much increased, it is understood that the pores were not closed, and thus, it is found from the overcharge test for Example 1 that the battery internal temperature did not reach the temperature at which the pores of the separator were closed. It is also found that the increase in the internal pressure of the battery in the overcharge test does not result from the closure of the pores in the separator.

It is considered that the same is applied to the batteries in Examples 2 and 3 with respect to the separator.

On the other hand, when the air resistance of the separator removed from the battery in each of Comparative Examples 1 and 2 was measured, the measurement was impossible because the air resistance was too large. Accordingly, it is found that the separator in each of Comparative Examples 1 and 2 reached the shut-down temperature due to the increase in the battery internal temperature during the overcharge test, and thus, the pores in the separator were closed.

It has been known that, when a nonaqueous electrolyte secondary battery is charged, a resistance coating film derived from an electrolyte solution component may be formed in a positive electrode active material layer (see, for example, Patent Document 3). It is considered that the reason for the increase in the battery internal pressure of the battery in each of Examples 1 to 3 is also because a resistance coating film derived from the electrolyte solution component is formed in the positive electrode active material layer. It is not considered that a resistance coating film was not formed in the positive electrode active material layer in the battery in each of Comparative Examples 1 and 2. However, it is assumed from the current/voltage behavior in Examples 1 to 3 and Comparative Examples 1 and 2 that, in contrast to each of Examples 1 to 3 in which a resistance coating film was relatively uniformly formed in the positive electrode, a resistance coating film was non-uniformly formed in the positive electrode in each of Comparative Examples 1 and 2.

In the battery in each of Comparative Examples 1 and 2, it is considered that the resistance coating film is non-uniformly formed to cause variation in speed of forming the resistance coating film, that is, there are a portion having a higher formation speed and a portion having a lower formation speed, and the resistance coating film is continuously formed on the portion having a lower formation speed even after the formation of the resistance coating film is completed on the portion having a higher formation speed. This can be assumed from the situation in which the voltage rise is not observed from around 5.5 V which is considered to be a reaction potential, as indicated by the voltage curve of Comparative Example 2 in Fig. 11.

Since a constant current flew until the shut-down of the separator occurred as indicated by the current curve of Comparative Example 2 in Fig. 13, it is considered that current was concentrated on the portion where the speed of forming the coating film was low, which caused a local flow of large current. Therefore, it is considered that the battery internal temperature was increased by heat generation due to the local large current, and thus, the safety valve was opened, and further, the pores in the separator were closed.

Although the reason why the resistance coating film is uniformly formed in the battery in each of Examples 1 to 3 is unclear, it is considered that the positive electrode active material layer included in the battery in each of Examples 1 to 3 has a porous structure having a high homogeneity. It is considered that, if the positive electrode active material layer has a porous structure having a high homogeneity, a reaction substance is uniformly supplied to a reaction section during the progress of a reaction for generating a resistance coating film in the positive electrode active material layer due to the charging current in overcharge. Therefore, the resistance coating film is considered to be uniformly formed.

On the other hand, since the positive electrode active material layer included in the battery in each of Comparative Examples 1 and 2 has a porous structure having relatively a low homogeneity, it is considered that a reaction substance is non-uniformly supplied to a reaction section during the progress of a reaction for generating a resistance coating film in the positive electrode active material layer due to the charging current in overcharge. Therefore, the resistance coating film is considered to be non-uniformly formed.

### EXPLANATION OF NUMERALS

- 1:: Positive electrode active material layer
- 3:: Positive electrode current collector
- 5:: Positive electrode
- 6:: Positive electrode active material
- 7:: Conductive auxiliary agent
- 8:: Carbonaceous coating film
- 9:: Pore
- 11:: Battery case
- 12:: Lid member
- 13:: Positive electrode connection member
- 14:: Negative electrode connection member
- 15:: Nonaqueous electrolyte
- 16a, 16b:: Screw member
- 18a, 18b:: External connection terminal
- 20a, 20b:: External insulating member
- 21a, 21b:: Internal insulating member
- 22:: Power generation element
- 25:: Shrink film
- 30:: Nonaqueous electrolyte secondary battery
- 32:: Negative electrode
- 34:: Separator
- 36:: Negative electrode active material layer
- 38:: Negative electrode current collector

## Claims

1. A positive electrode for a nonaqueous electrolyte secondary battery, comprising a porous positive electrode active material layer that contains a positive electrode active material, wherein
the positive electrode active material layer is formed so that a logarithmic differential pore volume distribution curve thereof, which shows the relation between pore diameter and pore volume of pores in the positive electrode active material layer, is a single-peak type curve,
the positive electrode active material has an olivine-type crystal structure,
the distribution curve is obtained by measuring a pore distribution of the positive electrode active material layer using a mercury porosimeter,
the distribution curve has the single peak having a full width at half maximum of from 0.001 µm to 0.05 µm inclusive, and
the sum of the pore volumes within a pore diameter range corresponding to the full width at half maximum is 70% or more of the total pore volume.

2. The positive electrode for a nonaqueous electrolyte secondary battery according to claim 1, wherein a mode diameter of pores in the positive electrode active material layer is from 0.04 µm to 0.1 µm inclusive, and
the mode diameter means a pore diameter at which the logarithmic differential pore volume is the maximum.

3. The positive electrode for a nonaqueous electrolyte secondary battery according to claim 1 or 2, wherein the positive electrode active material layer comprises a carbonaceous coating film formed on the positive electrode active material.

4. The positive electrode for a nonaqueous electrolyte secondary battery according to any one of claims 1 to 3, further comprising a current collector, wherein the positive electrode active material layer is formed on the current collector.

5. A nonaqueous electrolyte secondary battery comprising: the positive electrode according to any one of claims 1 to 5; a negative electrode; a separator interposed between the positive electrode and the negative electrode; a nonaqueous electrolyte; and a battery case storing the positive electrode, the negative electrode, the separator, and the nonaqueous electrolyte, wherein the nonaqueous electrolyte comprises a carbonate compound as a solvent.

## Patentansprüche

1. Positive Elektrode für eine nichtwässrige Elektrolytsekundärbatterie, umfassend eine poröse positive Elektrodenaktivmaterialschicht, die ein positives Elektrodenaktivmaterial beinhaltet, wobei
die positive Elektrodenaktivmaterialschicht so gebildet ist, dass ihre logarithmische Differentialporenvolumenverteilungskurve, die das Verhältnis zwischen Porendurchmesser und Porenvolumen von Poren in der positiven Elektrodenaktivmaterialschicht zeigt, eine Kurve vom Einzelspitzentyp ist,
das positive Elektrodenaktivmaterial eine Kristallstruktur vom Olivintyp hat,
die Verteilungskurve durch Messen einer Porenverteilung der positiven Elektrodenaktivmaterialschicht unter Verwendung eines Quecksilberporosimeters erhalten wird,
die Verteilungskurve die einzelne Spitze mit einer vollen Breite bei halbem Maximum von 0,001 µm bis inklusive 0,05 µm hat und
die Summe der Porenvolumina innerhalb eines Porendurchmesserbereichs, entsprechend der vollen Breite bei halbem Maximum, 70 % oder mehr des Gesamtporenvolumens ist.

2. Positive Elektrode für eine nichtwässrige Elektrolytsekundärbatterie nach Anspruch 1, wobei ein Modusdurchmesser von Poren in der positiven Elektrodenaktivmaterialschicht von 0,04 µm bis inklusive 0,1 µm reicht und
der Modusdurchmesser einen Porendurchmesser bedeutet, bei dem das logarithmische Differentialporenvolumen maximal ist.

3. Positive Elektrode für eine nichtwässrige Elektrolytsekundärbatterie nach Anspruch 1 oder 2, wobei die positive Elektrodenaktivmaterialschicht einen kohlenstoffhaltigen Beschichtungsfilm umfasst, der auf dem positiven Elektrodenaktivmaterial gebildet ist.

4. Positive Elektrode für eine nichtwässrige Elektrolytsekundärbatterie nach Anspruch 1 bis 3, weiter umfassend einen Stromabnehmer, wobei die positive Elektrodenaktivmaterialschicht auf dem Stromabnehmer gebildet ist.

5. Nichtwässrige Elektrolytsekundärbatterie, umfassend: die positive Elektrode nach einem der Ansprüche 1 bis 5; eine negative Elektrode; einen Separator, der zwischen der positiven Elektrode und der negativen Elektrode eingefügt ist; einen nichtwässrigen Elektrolyten; und ein Batteriegehäuse, das die positive Elektrode, die negative Elektrode, den Separator und den nichtwässrigen Elektrolyten speichert, wobei der nichtwässrige Elektrolyt eine Karbonatverbindung als ein Lösemittel umfasst.

## Revendications

1. Electrode positive pour une batterie rechargeable à électrolyte non aqueux, comprenant une couche poreuse de matériau actif d'électrode positive qui contient un matériau actif d'électrode positive, dans laquelle
la couche de matériau actif d'électrode positive est formée de sorte qu'une courbe de distribution de volume de pores différentielle logarithmique de celle-ci, qui montre la relation entre le diamètre de pore et le volume de pore des pores dans la couche de matériau actif d'électrode positive, est une courbe de type à pic unique,
le matériau actif d'électrode positive a une structure cristalline de type olivine,
la courbe de distribution est obtenue en mesurant une distribution des pores de la couche de matériau actif d'électrode positive au moyen d'un porosimètre au mercure,
la courbe de distribution a son pic unique ayant une largeur totale au demi-maximum de 0,001 µm à 0,05 µm inclus, et
la somme des volumes de pores dans une plage de diamètres de pores correspondant à la largeur totale au demi-maximum est de 70 % ou plus du volume de pores total.

2. Electrode positive pour une batterie rechargeable à électrolyte non aqueux selon la revendication 1, dans laquelle un diamètre de mode des pores dans la couche de matériau actif d'électrode positive est de 0,04 µm à 0,1 µm inclus, et
le diamètre de mode signifie un diamètre de pore auquel le volume de pore différentiel logarithmique est le maximum.

3. Electrode positive pour une batterie rechargeable à électrolyte non aqueux selon la revendication 1 ou 2, dans laquelle la couche de matériau actif d'électrode positive comprend un film de revêtement carboné formé sur le matériau actif d'électrode positive.

4. Electrode positive pour une batterie rechargeable à électrolyte non aqueux selon l'une quelconque des revendications 1 à 3, comprenant en outre un collecteur de courant, dans laquelle la couche de matériau actif d'électrode est formée sur le collecteur de courant.

5. Batterie rechargeable à électrolyte non aqueux comprenant : l'électrode positive selon l'une quelconque des revendications 1 à 5 ; une électrode négative ; un séparateur intercalé entre l'électrode positive et l'électrode négative ; un électrolyte non aqueux ; et un boîtier de batterie stockant l'électrode positive, l'électrode négative, le séparateur et l'électrolyte non aqueux, dans laquelle l'électrolyte non aqueux comprend un composé de carbonate en tant que solvant.
